# EUROPEAN PATENT APPLICATION

(11) **EP 1 457 798 A1**
(43) Date of publication of application: **15.09.2004**
(21) Application number: 03251494.5
(22) Date of filing: 12.03.2003
(51) Int. Cl.: G02B 6/42

(54) **Hybrid integrated optical module**

(71) Applicant: Agilent Technologies, Inc. - a Delaware corporation -, Palo Alto, CA 94303-0870 (US)
(72) Inventor: Cognolato, Livio, Agilent Technologies Italia, 10148 Torino (IT); De Bernardi, Carlo, Agilent Technologies Italia, 10148 Torino (IT)
(74) Representative: Coker, David Graeme

(57) **Abstract**

A hybrid integrated gain block includes a substrate (2) and a plurality of components (5 to 9, 11, 13) hosted on the substrate (2). The components are used in chip form and/or inserted in seats (10, 12) provided in said substrate (2). The substrate (2) includes a material such as silicon and is preferably comprised of a silicon optical bench (SiOB). Micromachined coupling formations for at least one of an input (3) and output (4) signal optical fiber are provided. The block also preferably includes a pump laser (6) and an optical coupler (5) for combining an input signal with the optical pump signal generated by the pump laser (6). The optical coupler may include optical waveguides located in a face-to-face relationship in the vertical direction, a directional coupler and/or a multimode interferometer comprised of passive glass layers. At least one coupler (7) for tapping optical power useful for signal monitoring by at least one monitoring detector (8) provided on the substrate (2). One or more optical isolators (9) and/or collimating or focusing optical component (11) are arranged in respective seats etched in the surface of said substrate (2). The block may include an associated active gain medium (13) such as an optical fiber or an optical waveguide doped with erbium and/or other rare earths.

## Description

The present invention relates to integrated gain blocks and was devised by paying specific attention to the possible use in optical communication systems. However, reference to this preferred field of use must in no way be construed as limiting the scope of the invention.

Optical amplification is one of the fundamental functions of optical networking: losses introduced either by long fiber spans, or by network elements like multiplexers, de-multiplexers, switches, add-drop filters, etc. have to be recovered in some way.

During the last decade, so-called optical gain blocks (i.e. amplifiers not requiring the conventional sequence of optical-to-electrical conversion, electrical amplification, and electrical-to-optical conversion) have started to substitute traditional electronic amplification in long haul lines and networks.

Their use in metropolitan networks is still rare. The main reasons for this situation are the small number of subscribers sharing the costs of new equipment, and the size-hungry amplifying devices to be placed in telecom exchange offices.

At least for the time being, Network Elements Manufacturers (NEMs) are thus reluctant to introduce optical gain blocks in those network sections that are closer to the subscribers, i.e. metro and access.

Also, relatively compact Erbium Doped Fiber Amplifiers (EDFA) and Erbium Doped Waveguide Amplifiers (EDWA) have been proposed, but their costs, and relatively large size do not fully satisfy NEMs' needs.

A different approach, which in principle might solve most of these problems and permit a more integrated level of operation, is the semiconductor optical amplifier (SOA); however, the current performance levels of SOAs, in particular output power, non-linearity, noise figure, still fail to fully cope with the requirements and the user expectations, especially in terms of compactness and low cost.

In WO-A-02/075864 an optical amplification structure is disclosed including an amplification unit on a substrate. The amplification unit includes a first microguide to receive the light wave to be amplified as well as a second microguide for receiving a pump wave. A multiplexing device associated with the two microguides provides a coupled light wave comprised of two waves. An amplification device is connected to the output of the multiplexing device to provide an amplified light wave. A third microguide is connected to the output of the amplification device in order to transport the amplified light towards a demultiplexer that extracts a component corresponding to the pump wave to produce on a fourth microguide an amplified light wave depurated from the pump wave component.

From US-B-6 493 476 an integrated photonic apparatus is known including a glass substrate including a plurality or regions having different refraction indexes. The integrated apparatus includes an input signal waveguide, and output signal waveguide, a input pump waveguide, and a pump-stabilizing grating.

The object of the invention is to provide an improved integrated gain block.

According to the present invention, such an objet is achieved by means of a hybrid gain block having the features set forth in the claims that follow.

Essentially, the presently preferred embodiment of the invention is based on the use of a platform on which all the mechanical and optical functions are placed; the corresponding components are used in chip form, instead of being fully engineered modules, and/or inserted in seats provided in the substrate. A limited number of pieceparts to be handled is used, thus leading a remarkable reduction of size-consuming modules. In addition, thermal management of the device can be simplified by employing a heat-conductive material as substrate.

Another advantage is the wide range of different types of optical amplifiers adapted to co-operate with such a hybrid integrated platform (HIP). In fact, no limitations are imposed as to the use of either fiber or planar active elements, the number of pump lasers and optical monitors, pump stabilizing filters, dynamic gain equalizers (DGE), gain flatteners, optical isolators, coupling micro-optics, etc.

The invention will now be described, by way of example only, by referring to the enclosed figures of drawing, wherein:
- Figure 1 is a plan view of a SiOB platform embodying he invention,
- Figures 2 and 3 are cross sectional views along lines II-II and III-III of Figure 1, respectively, and
- Figures 4 and 5 exemplify possible arrangements employing the SiOB platform of figure 1.

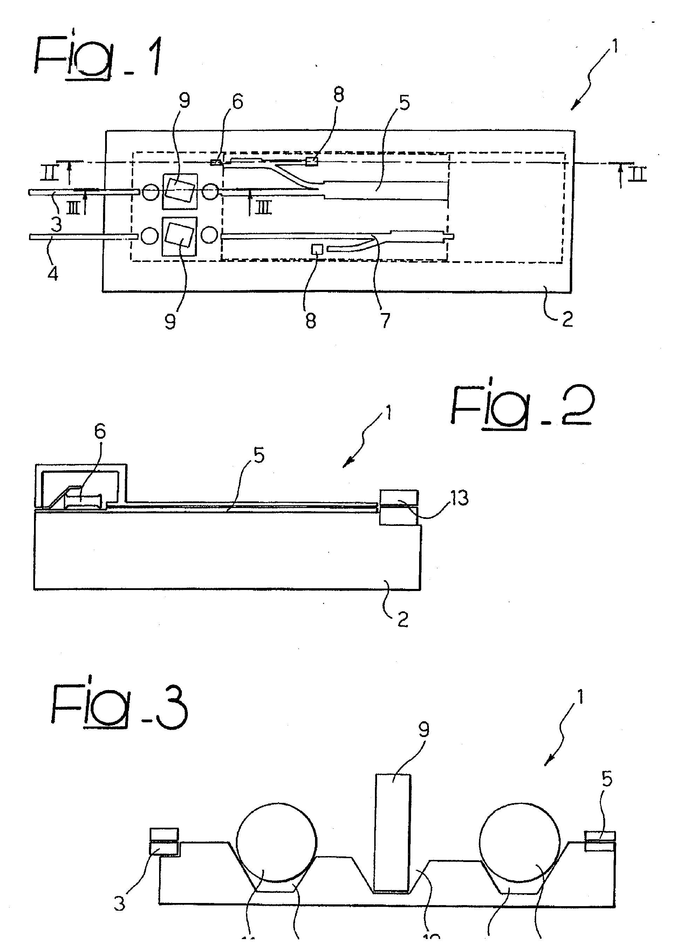

In figure 1, a hybrid integrated platform (HIP) 1 is shown based on a substrate 2 comprised of a so-called silicon optical bench (SiOB).

The silicon substrate 2 represents the platform on which all the optical and mechanical functions are hosted in a fully integrated manner.

Silicon is a presently preferred choice for the material of the substrate 2 as silicon can be micromachined and used as a deposition substrate, so the trenches, holes, grooves, electrical pads and contacts, glass and metal layers can be easily fabricated on thereon.

Additionally, silicon is a heat-conductive material, which simplifies thermal management of the device 1.

Materials exhibiting at least partly similar characteristics such as e.g. other semiconductors may represent alternatives to silicon.

Input and output signal optical fibers 3, 4 are inserted and passively aligned by means of coupling grooves micromachined by known techniques on silicon.

An optical coupler 5 is provided to combine the input signal with an optical pump signal generated by a pump laser 6. The coupler 5 is formed for example by a directional coupler or a multimode interferometer (MMI), comprised of passive glass layers deposited by well known vapour deposition techniques and patterned by a photolithographic process.

Similar couplers, e.g. at 7, can be used to tap a small fraction of power useful for signal monitoring.

Monitoring detectors (e.g. photodiodes) are provided at different locations of the substrate as indicated e.g. at 8.

Direct coupling of laser pump chip(s) 6 to the optical signal/pump combiner 5 is obtained by passive alignment. This is preferably achieved by accurately choosing the waveguide layer thickness perpendicularly to the substrate main surface.

In a presently preferred embodiment of the invention, the glass layers are in fact deposited over the whole silicon substrate 2. Subsequently, they can be very precisely removed in the area where the pump laser is to be placed. This may be achieved by wet or dry etch to leave a thickness such that the active stripe of the pump laser is precisely located in face-to-face relationship with the passive waveguide core in the vertical direction.

In the horizontal plane (i.e. along the main substrate surface) a good coupling is obtained by aligning suitable reference features on the silicon substrate 2 and on the laser surfaces, and proceeding to assembly in a flip-chip configuration.

This approach effectively reduces from 3-D to 2-D the laser positioning process. Moreover, laser flip-chip assembly assures a more efficient thermal dissipation, so paving the way towards the use of uncooled pumps.

A similar approach can be adopted for optical power monitoring, both at the input side (just after the signal has entered in the waveguide) and at the output (just before re-emerging out of the gain block), to be coupled with the output fiber.

Optical isolators 9 are placed in appropriate seats, micromachined by wet etching the silicon substrate 2. A very high level of precision may be achieved by resorting to this process, which permits passive alignment of the optical axis of the isolator to the axis of the beam to be transmitted.

If additional optics are required for improved performance (e.g. for collimating or focusing the beams), optical components like micro-lenses 11 (e.g. ball or graded index lenses) can be conveniently and accurately placed in suitable seats 12 again obtained by etching the surface of the silicon substrate 2.

One of the processes that can be used to machine with a high degree of accuracy mechanical features in silicon is anisotropic wet etch. This process exploits preferential erosion of silicon along specific directions defined by the crystal lattice orientation. Submicrometric precision of the etched features is reproducibly achieved.

A typical size of the platform 2 is 50 x 5 mm²; the thickness is between 2 and 3 mm; total size of the final package, which can contain also the control and driving electronics, can also be very compact.

The active (gain) medium 13 is coupled to the hybrid integrated platform 1, and can be chosen according to the specifications of the gain block.

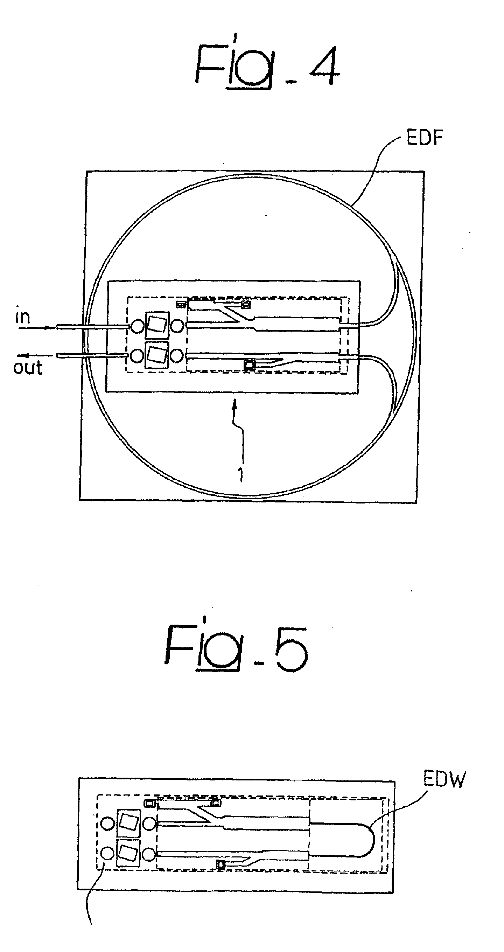

Both EDFA and EDWA schemes can be used advantageously in connection with the hybrid integrated platform 1 as shown in figures 4 and 5. These represent fiber-based and the all-planar versions, respectively.

The associated active gain medium may thus be an optical fiber doped with at least one rare earth selected e.g. from the group consisting of erbium, neodymium, ytterbium, thulium, praseodymium, cerium and combinations thereof. Similarly, the associated active gain medium may be an optical waveguide doped with at least one rare earth selected e.g. from the group consisting of erbium, neodymium, ytterbium, thulium, praseodymium, cerium and combinations thereof.

These may permit amplification at wavelengths different from erbium.

The use of a combination of two or more rare earths simultaneously (e.g. erbium and ytterbium) increases the efficiency of pump power absorption.

Non-silica glasses may be preferred at least in some cases.

In fact, active fibers can be passively coupled to the hybrid integrated platform 1 via V-grooves machined in the silicon substrate 2, while Er-doped glass waveguides can be coupled to the passive glass part of the HIP.

The two glass parts can be bonded or cemented together, while alignment may be obtained by suitable reference markers and/or mechanical stops fabricated on both parts.

Other techniques, such as glass vapour deposition or GVD (both physical and chemical), molding or hot imprinting can be used to realise patterned planar linear couplers (PLCs) on silicon.

Of course, without prejudice to the underlying principle of the invention, the details and embodiments may vary, also significantly, with respect to what has been described and shown by way of example only, without departing from the scope of the invention as defined by the annexed claims. Finally, it will be appreciated that terms such as "optical", "light", "photosensitive", and the like are used herein with the meaning currently allotted to those terms in fiber and integrated optics, being thus intended to apply to radiation including, in addition to visible light, e.g. also infrared and ultraviolet radiation.

## Claims

1. A hybrid integrated gain block, including a substrate (2) and a plurality of components (5 to 9, 11, 13) hosted on said substrate (2), wherein said components are used in chip form and/or inserted in seats (10, 12) provided in said substrate (2).

2. The block of claim 1, **characterized in that** said substrate (2) includes a heat-conductive material.

3. The block of claim 1 or claim 2, **characterized in that** said substrate (2) includes silicon.

4. The block of claim 3, **characterized in that** said substrate (2) is comprised of a silicon optical bench (SiOB).

5. The block of any of the previous claims, **characterized in that** it includes a micromachined coupling formation for at least one of an input (3) and output (4) signal optical fiber.

6. The block of claim 1, **characterized in that** it includes a pump laser (6) for generating an optical pump signal and an optical coupler (5) for combining an input signal with said optical pump signal generated by said pump laser (6).

7. The block of claim 6, **characterized in that** said optical coupler includes optical waveguides located in a face-to-face relationship in the vertical direction.

8. The block of either of claims 6 or 7, **characterized in that** said coupler (5) includes a directional coupler.

9. The block of either of claims 6 or 7, **characterized in that** said coupler (5) includes a multimode interferometer.

10. The block of claim 9, **characterized in that** said intererometer is comprised of passive glass layers.

11. The block of claim 1, **characterized in that** it includes at least one coupler (7) for tapping optical power useful for signal monitoring.

12. The block of claim 1 or claim 11, **characterized in that** it includes at least one monitoring detector (8) provided on said substrate (2).

13. The block of claim 1, **characterized in that** it includes at least one optical isolator (9) arranged in a respective seat provided in said substrate (2).

14. The block of claim 1, **characterized in that** it includes at least one collimating or focusing optical component (11) arranged in a respective seat provided in said substrate (2)

15. The block of any of claims 1, 13 or 14, **characterized in that** said seats are seats etched in the surface of said substrate (2).

16. The block of claim 1, **characterized in that** it includes an associated active gain medium (13).

17. The block of claim 16, **characterized in that** said associated active gain medium is an optical fiber doped with at least one rare earth.

18. The block of claim 16, **characterized in that** said associated active gain medium is an optical waveguide doped with at least one rare earth.

19. The block of either of claims 17 or 18, **characterized in that** said rare earth is selected from the group consisting of erbium, neodymium, ytterbium, thulium, praseodymium, cerium.

20. The block of claim 17, **characterized in that** said associated active gain medium is an erbium-doped optical fiber.

21. The block of claim 18, **characterized in that** said associated active gain medium is an erbium-doped optical waveguide.

22. The block of either of claims 17 or 18, **characterized in that** said active medium is doped with a combination of two or more rare earths.

23. The block of either of claims 17 or 18, **characterized in that** said active medium is doped with a combination of erbium and ytterbium.
